# EUROPÄISCHE PATENTSCHRIFT

(11) **EP 3 109 425 B1**
(45) Veröffentlichungstag und Bekanntmachung des Hinweises auf die Patenterteilung: **15.08.2018**
(21) Anmeldenummer: 16001351.2
(22) Anmeldetag: 15.06.2016
(51) Int. Cl.: F01N 3/20

(54) **REDUKTIONSMITTELTANK MIT INTEGRIERTEM FLUIDKANAL ZUM FÜHREN EINES HEIZFLUIDES**
REDUCING AGENT TANK WITH INTEGRATED FLUID CHANNEL FOR GUIDING A HEATING FLUID
RÉSERVOIR DE MOYEN DE RÉDUCTION AVEC CANAL DE FLUIDE INTÉGRÉ POUR LA CONDUITE D'UN FLUIDE CHAUD

(30) Priorität: 27.06.2015 DE 102015008351; 26.09.2015 DE 102015012625
(43) Veröffentlichungstag der Anmeldung: 28.12.2016
(60) Teilanmeldung: 18179743.2
(73) Patentinhaber: MAN Truck & Bus AG, 80995 München (DE)
(72) Erfinder: Wiegert, Andreas, 85757 Karlsfeld (DE)
(74) Vertreter: v. Bezold & Partner Patentanwälte - PartG mbB

(56) Entgegenhaltungen:
- EP-A1- 2 733 321
- DE-A1-102010 029 269
- DE-A1-102012 020 040
- DE-U1- 20 314 557
- DE-U1-202005 019 499
- Günther Pflug ET AL: "A D D I T I V E - Nanoskalige Füllstoffe", Kunststoffe 12/2009, 1. Dezember 2009 (2009-12-01), XP055313471, Gefunden im Internet: URL:https://www.kunststoffe.de/_storage/as set/538981/storage/master/file/5806046/dow nload/Wärme besser leiten.pdf [gefunden am 2016-10-24]

## Beschreibung

Die Erfindung betrifft einen Reduktionsmitteltank für ein Reduktionsmittel und zweckmäßig zur Montage an ein Kraftfahrzeug, insbesondere einen Harnstofftank für eine wässrige Harnstofflösung.

Kraftfahrzeug-Reduktionsmitteltanks zur Aufnahme eines Reduktionsmittels sind im Stand der Technik in den unterschiedlichsten Ausführungsformen bekannt. So offenbart z. B. DE 10 2011 108 213 A1 einen beheizbaren Reduktionsmitteltank, der über elektrische Heizelemente beheizbar ist und dessen Reduktionsmittel über ein Tank-externes Fördermodul befördert werden kann. Zum Stand der Technik wird ferner verwiesen auf die DE 10 2012 020040 A1, die DE 203 14 557 U1, die DE 20 2005 019499 U1, die DE 10 2010 029269 A1, die EP 2 733 321 A1 und Günther Pflug ET AL: "ADDITIVE - Nanoskalige Füllstoffe", Kunststoffe 12/2009, 1. Dezember 2009.

Eine Aufgabe der Erfindung ist es, einen alternativen und/oder verbesserten Reduktionsmitteltank für ein Reduktionsmittel zu schaffen.

Diese Aufgabe wird mit den Merkmalen des Hauptanspruchs gelöst. Vorteilhafte Weiterbildungen der Erfindung können den Unteransprüchen und der folgenden Beschreibung bevorzugter Ausführungsformen der Erfindung entnommen werden.

Die Erfindung schafft einen Reduktionsmitteltank für ein Reduktionsmittel, vorzugsweise einen Harnstofftank zur Aufnahme einer wässrigen Harnstofflösung, z. B. eines Harnstoff-Wasser-Gemischs.

Der Reduktionsmitteltank dient zweckmäßig zur Montage an ein Kraftfahrzeug, vorzugsweise Nutzfahrzeug, insbesondere Lastkraftwagen oder Omnibus.

Das Reduktionsmittel dient insbesondere zur Versorgung eines Abgasreinigungssystems, z. B. eines auf Basis der katalytischen Reduktion arbeitenden Abgasreinigungssystems.

Der Reduktionsmitteltank umfasst ein Gehäuse zur Aufnahme des Reduktionsmittels, ein Tanksegment und vorzugsweise ein Fördermodul, z. B. eine Pumpe, zum Fördern des Reduktionsmittels.

Das Tanksegment zeichnet sich insbesondere dadurch aus, dass es zumindest einen integrierten, insbesondere an- oder eingeformten, Fluidkanal zum Führen eines Fluides zum Erwärmen, insbesondere zum Heizen, des Reduktionsmittels aufweist, vorzugsweise so, dass das Tanksegment selbst den Fluidkanal ausbildet. Der Fluidkanal ist somit vorzugsweise einstückig-integraler Teil des Tanksegments.

Der Fluidkanal ist somit insbesondere kein zum Tanksegment separates Rohr oder Schlauch.

Das Tanksegment wird, zweckmäßig in seiner Herstellung bzw. herstellungsbedingt, vorzugsweise so ausgeführt, dass der Fluidkanal mit integriert wird, insbesondere mit ausgeformt wird, z. B. ein- oder angeformt wird.

Es ist möglich, dass ein und dasselbe Formteil das Tanksegment und den Fluidkanal ausbildet.

Das Tanksegment und/oder das Formteil sind vorzugsweise ein Spritzgussteil und somit zweckmäßig aus einem Kunststoffmaterial gefertigt.

Der Fluidkanal ist zweckmäßig auf der Innenseite des Tanksegments ausgebildet.

Es ist möglich, dass das Tanksegment das Fördermodul aufweist und somit zweckmäßig das Fördermodul in das Tanksegment integriert ist. Hierzu kann das Tanksegment insbesondere eine Aufnahmeöffnung für das Fördermodul aufweisen.

Es ist möglich, dass ein Fluidkanal zumindest abschnittsweise im Wesentlichen geradlinig verläuft und/oder im Wesentlichen bogenförmig, insbesondere im Wesentlichen kreisbogenförmig um die Aufnahmeöffnung für das Fördermodul bzw. das Fördermodul verläuft. Alternativ oder ergänzend kann ein Fluidkanal zumindest abschnittsweise mäanderförmig verlaufen.

Das Tanksegment umfasst vorzugsweise eine im Wesentlichen hauben- und/oder flächenförmige Wandung, um ein vorzugsweise hauben- und/oder flächenförmiges Bauteil zu schaffen. Die Wandung dient vorzugsweise als untere Abschlussabdeckung für das Gehäuse.

Das Tanksegment bildet zweckmäßig eine Begrenzungsstruktur für den Fluidkanal, die den Fluidkanal entlang seiner Längserstreckung begrenzt.

Die Begrenzungsstruktur umfasst vorzugsweise zumindest zwei im Wesentlichen parallel verlaufende, z. B. rippenförmige Wandelemente und einen innenseitigen Teil der hauben- und/oder flächenförmigen Wandung.

Der Fluidkanal wird somit vorzugsweise durch im Wesentlichen parallel verlaufende Wandelemente und einen Teil der hauben- und/oder flächenförmigen Wandung begrenzt.

Es ist möglich, dass das Tanksegment und/oder die Begrenzungsstruktur den Fluidkanal zu einer Seite hin offen lässt und die Seite und somit der Fluidkanal durch ein benachbartes Tankelement geschlossen wird.

Vorzugsweise lässt das Tanksegment den Fluidkanal zur Oberseite hin offen, wobei die Oberseite und somit der Fluidkanal durch ein aufgesetztes Tankelement, insbesondere ein Bodensegment, z. B. eine Bodenplatte, des Gehäuses geschlossen wird.

Das Tanksegment ist vorzugsweise unter einem Bodensegment des Gehäuses angeordnet. Das Tanksegment dient insbesondere als Bodenheizung für das Gehäuse.

Das Tanksegment kann einen Fluidkanal-Einlass und/oder einen Fluidkanal-Auslass aufweisen.

Der Fluidkanal dient vorzugsweise zur Verbindung mit einem Kühlkreislauf einer Verbrennungskraftmaschine des Kraftfahrzeugs. Hierzu kann das Tanksegment z. B. einen Fluidkanal-Einlass und/oder einen Fluidkanal-Auslass aufweisen.

Der Fluidkanal ist vorzugsweise ein Heizkanal.

Ziel ist, dass ein möglichst großer Bereich des Tanksegments durch das Fluid anströmbar und somit erwärmbar ist und/oder eine möglichst maximale Ausnutzung der zur Verfügung stehenden Heizfläche des Tanksegments gepaart mit konstruktiv möglichst maximaler Länge des Fluidkanals.

Das Fluid kann z. B. Verbrennungskraftmaschinen-Kühlflüssigkeit sein.

Es ist möglich, dass der Fluidkanal mittels einer durch das Tanksegment gebildeten Begrenzungsstruktur begrenzt wird und die Begrenzungsstruktur z. B. eine Seitenaußenwand oder mehrere Seitenaußenwände des Tanksegments umfasst.

Der zumindest eine Fluidkanal kann zumindest abschnittsweise im Wesentlichen geradlinig verlaufen, z. B. um die Aufnahmeöffnung für das Fördermodul.

Es ist möglich, dass zumindest ein Fluidkanal mäanderförmig, labyrinthförmig und/oder schneckenförmig verläuft.

Die Begrenzungsstruktur für den Fluidkanal kann ein Wandelement-Paar umfassen, dessen Wandelemente sich zweckmäßig im Wesentlichen parallel und/oder vorzugsweise kontinuierlich über das Tanksegment erstrecken, so dass insbesondere der mäanderförmige Fluidkanalverlauf gebildet werden kann. Die Begrenzungsstruktur kann alternativ oder ergänzend eine Vielzahl, z. B. mehr als zwei, mehr als vier oder sogar mehr als sechs, zweckmäßig im Wesentlichen parallel erstreckende Wandelement-Paare umfassen. Die Wandelemente der Wandelement-Paare überlappen sich zweckmäßig abschnittsweise und/oder können sich in gegenläufige, insbesondere entgegengesetzte Richtungen erstrecken. Die Wandelement-Paare erzeugen zweckmäßig an deren Längsenden einen Fluidkanal-Richtungswechsel, z. B. um im Wesentlichen 180°. Dadurch kann insbesondere ein labyrintförmiger Fluidkanal-Verlauf realisiert werden.

Die Wandelemente sind vorzugsweise rippenförmig ausgebildet.

Dadurch, dass der Fluidkanal maänderförmig, schneckenförmig und/oder labyrinthförmig ausgeführt sein kann, kann vorzugsweise ermöglicht werden, dass sich der Fluidkanal über einen Großteil der Grundfläche des Tanksegments erstreckt, vorzugsweise über zumindest nahezu die gesamte Grundfläche des Tanksegments, z. B. über über 80% oder sogar 90% der Grundfläche des Tanksegments, zweckmäßig mit Ausnahme der Aufnahmeöffnung für das Fördermodul.

Zwischen dem Gehäuse und dem Tanksegment ist ein Tankelement aus Kunststoffmaterial angeordnet.

Im Rahmen der Erfindung kann der Fluidkanal vorzugsweise zur Oberseite hin durch ein zweckmäßig aufgesetztes Tankelement vervollständigt und/oder geschlossen werden. Z. B. entsteht ein vollständiger, zur Oberseite hin geschlossener und/oder betriebsfähiger Fluidkanal insbesondere erst durch ein zweckmäßig aufgesetztes Tankelement, vorzugsweise, wenn das Tanksegment und das Tankelement gefügt sind.

Das Tankelement kann aus Kunststoffmaterial ausgebildet werden. Die Wärmeleitfähigkeit von Kunststoffmaterial ist allerdings relativ gering, z. B. im Vergleich zu Aluminium oder Stahl. Durch die Wahl des Werkstoffs Kunststoff wird die Heizleistung des Tanksegments verringert.

Um diesen Nachteil zu reduzieren, ist das Kunststoffmaterial mit zumindest einem Zusatzwerkstoff (z. B. Additiv, Füllstoff und/oder Zusatzstoff) additiviert, so dass zweckmäßig der Zusatzwerkstoff in das Kunststoffmaterial eingelagert ist. Der Zusatzwerkstoff ist dem Kunststoffmaterial zugesetzt, um zweckmäßig die Wärmeleitfähigkeit des Kunststoffmaterials und somit des Tankelements zu erhöhen.

Die Zugabe des Zusatzwerkstoffs erfolgt zweckmäßig während des Herstellprozesses des Tankelements durch Beimischung und/oder Additivierung des Zusatzwerkstoffs zum Kunststoffmaterial.

Durch anteilige Beimischung und/oder Additivierung kann die Wärmeleitfähigkeit des Kunststoffmaterials des Tankelements dementsprechend erhöht werden, so dass zweckmäßig die Heizleistung des Tanksegments über das Tankelement auf das Reduktionsmittel im Gehäuse steigerbar ist.

Der zur Verbesserung/Erhöhung der Wärmeleitfähigkeit dienende Zusatzwerkstoff kann zumindest ein Additiv umfassen, z. B. Bornitrid.

Es ist möglich, dass das Tankelement zur Trennung und/oder Kontaktierung des Reduktionsmittels im Gehäuse und des Fluids im Tanksegment ausgebildet ist. Dadurch kann z. B. ein Vermischen des Reduktionsmittels im Gehäuse und des Fluids im Tanksegment vermieden werden.

Das Kunststoffmaterial und/oder der Zusatzwerkstoff sind vorzugsweise Harnstoff-resistent.

Es ist möglich, dass der Zusatzwerkstoff in das Kunststoffmaterial eingearbeitet (z. B. eingeschlossen, eingebettet, etc.) ist, um nicht mit dem Reduktionsmittel, insbesondere Harnstoff, in Kontakt zu kommen. In diesem Fall bedeckt das Kunststoffmaterial zweckmäßig herstellungsbedingt den Zusatzwerkstoff, so dass der Zusatzwerkstoff vom Reduktionsmittel isoliert wird und somit zweckmäßig mit dem Reduktionsmittel nicht in Kontakt gelangen kann. Z. B. kann der Zusatzwerkstoff mittels entsprechender Herstellung durch Kunststoffmaterial im Wesentlichen vollständig umschlossen sein. Der Zusatzwerkstoff muss also nicht zwingend Reduktionsmittel-resistent, insbesondere Harnstoff-resistent, sein.

Das Tankelement ist vorzugsweise plattenförmig ausgebildet, z. B. als Gehäusebodenplatte und/oder Tanksegmentdeckenplatte.

Das Tankelement kann mit dem Gehäuse und/oder dem Tanksegment gefügt sein, z. B. durch Kleben oder Schweißen.

Der Reduktionsmitteltank kann eine elektrische Heizeinrichtung zum Erwärmen des Reduktionsmittels im Gehäuse aufweisen, insbesondere zusätzlich zum als Bodenheizung wirkenden Tanksegment.

Das Tanksegment kann ferner mehrere Versteifungsrippen aufweisen, insbesondere zur Aussteifung und somit zweckmäßigen Verstärkung der hauben- und/oder flächenförmigen Wandung.

Die Erfindung ist nicht auf einen Reduktionsmitteltank begrenzt, sondern umfasst auch ein Tanksegment wie hierin offenbart.

Des Weiteren umfasst die Erfindung ein Kraftfahrzeug, vorzugsweise ein Nutzfahrzeug, insbesondere einen Omnibus oder einen Lastkraftwagen, mit einem Reduktionsmitteltank wie hierin offenbart.

Das Kraftfahrzeug umfasst vorzugsweise ein Abgasnachbehandlungssystem, das mit dem Reduktionsmittel aus dem Reduktionsmitteltank versorgt werden kann.

Die zuvor beschriebenen bevorzugten Ausführungsformen und Merkmale der Erfindung sind miteinander kombinierbar. Andere vorteilhafte Weiterbildungen sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine perspektivische Ansicht eines Reduktionsmitteltanks gemäß einer Ausführungsform der Erfindung,
- Figur 2: zeigt eine andere perspektivische Ansicht des Reduktionsmitteltanks der Figur 1 mit einer illustrativen Weglassung, so dass zu Illustrationszwecken in den Reduktionsmitteltank hineingeschaut werden kann,
- Figur 3: zeigt eine perspektivische Ansicht eines Tanksegments gemäß einer Ausführungsform der Erfindung,
- Figur 4: zeigt eine andere perspektivische Ansicht des Tanksegments der Figur 3,
- Figur 5: zeigt eine explosionsartige Schnittansicht eines Reduktionsmitteltanks gemäß einer Ausführungsform der Erfindung,
- Figur 6: zeigt eine perspektivische Ansicht des Reduktionsmitteltanks der Figur 5,
- Figur 7: zeigt eine Draufsicht auf ein Tanksegment gemäß einer Ausführungsform der Erfindung, und
- Figur 8: zeigt eine perspektivische Ansicht des Tanksegments der Figur 7.

Die in den Figuren gezeigten Ausführungsformen stimmen teilweise überein, so dass ähnliche oder identische Teile mit den gleichen Bezugszeichen versehen sind, und zu deren Erläuterung auch auf die Beschreibung der anderen Ausführungsformen bzw. Figuren verwiesen wird, um Wiederholungen zu vermeiden.

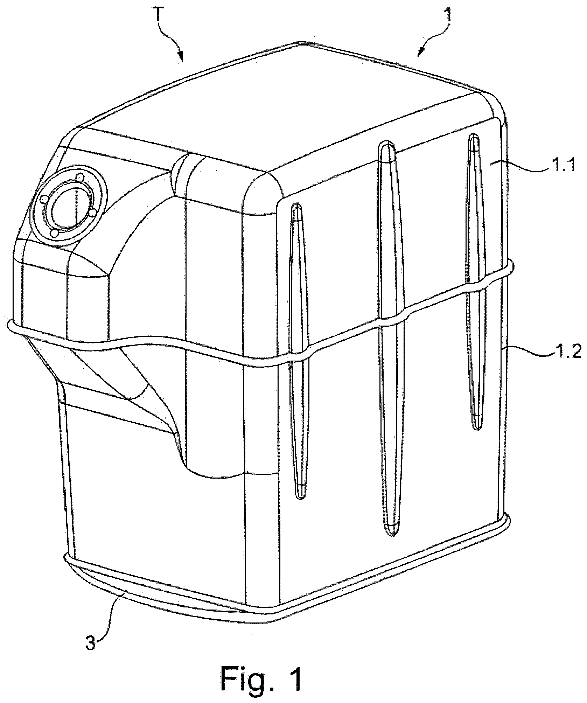

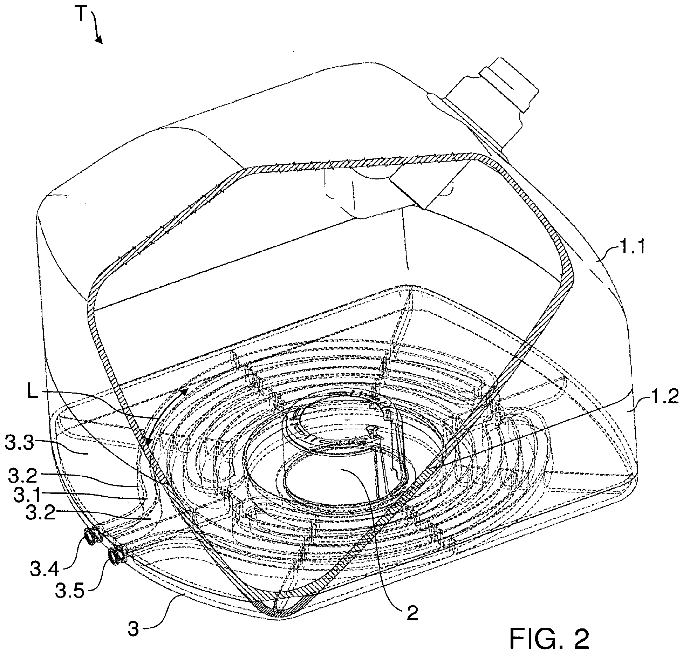

Figur 1 zeigt eine perspektivische Ansicht eines Reduktionsmitteltanks T für ein Reduktionsmittel, insbesondere einen Harnstofftank für eine vorzugsweise wässrige Harnstofflösung, z. B. sogenanntem AdBlue. Figur 2 zeigt eine andere perspektivische Ansicht des Reduktionsmitteltanks T der Figur 1 mit einer illustrativen Weglassung, so dass zu Illustrationszwecken in den Reduktionsmitteltank T hineingeschaut werden kann.

Unter Bezugnahme auf die Figuren 1 und 2 umfasst der Reduktionsmitteltank T ein Gehäuse 1 aus zwei aneinander montierten Gehäuseabschnitten 1.1 und 1.2 zur Aufnahme des Reduktionsmittels, ein Fördermodul 2 zum Fördern des Reduktionsmittels und ein unter dem Gehäuse 1 angeordnetes Tanksegment 3. Der Reduktionsmitteltank T dient zur Montage an ein Kraftfahrzeug, vorzugsweise ein Nutzfahrzeug, insbesondere ein Lastkraftwagen oder einen Omnibus.

Das Tanksegment 3 ist mit einem integrierten Fluidkanal 3.1 zum Führen eines Fluids zum Erwärmen des Reduktionsmittels versehen, so dass das Tanksegment 3 selbst den Fluidkanal 3.1 ausbildet. Das Tanksegment 3 und der Fluidkanal 3.1 werden somit durch ein und dasselbe Formteil, vorzugsweise ein Spritzgussteil ausgebildet. Das Tanksegment 3 wird in seiner Herstellung so ausgeführt, dass der Fluidkanal 3.1 mit integriert wird, insbesondere mit ausgeformt wird, z. B. ein- oder angeformt wird.

Das Tanksegment 3 umfasst eine flächenförmige, zweckmäßig haubenförmige Wandung 3.3, an deren Innenseite der Fluidkanal 3.1 ausgebildet ist. Die flächenförmige Wandung 3.3 bildet zweckmäßig eine untere Abschlussabdeckung für das Gehäuse 1.

Das Tanksegment 3 bildet eine Begrenzungsstruktur 3.2 für den Fluidkanal 3.1. Die Begrenzungsstruktur 3.2 begrenzt den Fluidkanal 3.1 entlang seiner Längserstreckung L. Die Begrenzungsstruktur 3.2 umfasst zwei im Wesentlichen parallel verlaufende Wandelemente 3.2 und einen innenseitigen Teil der flächenförmigen Wandung 3.3. Die zwei Wandelemente 3.2 begrenzen den Fluidkanal 3.1 seitlich. Die flächenförmige Wandung 3.3 begrenzt den Fluidkanal 3.1 nach unten.

Das Tanksegment 3, insbesondere die Begrenzungsstruktur 3.2 und 3.3, lässt den Fluidkanal 3.1 zu einer Seite hin offen, nämlich in Figur 2 zur Oberseite hin. Die offene Seite, also in Figur 2 die Oberseite, und somit der Fluidkanal 3.1 wird im Montagezustand des Reduktionsmitteltanks T durch ein benachbartes Tankelement geschlossen, nämlich in Figur 2 durch ein Bodensegment, zweckmäßig eine Bodenplatte, des Gehäuses 1.

Das Tanksegment 3 umfasst ferner eine Aufnahmeöffnung für das Fördermodul 2 zum Fördern des Reduktionsmittels, so dass das Fördermodul 2 zweckmäßig in das Tanksegment 3 integriert ist. Der Fluidkanal 3.1 erstreckt sich zumindest abschnittsweise im Wesentlichen kreisbogenförmig und mäanderförmig um die Aufnahmeöffnung und somit um das Fördermodul 2.

Das Tanksegment 3 umfasst einen Fluidkanal-Einlass 3.4 und einen Fluidkanal-Auslass 3.5.

Der Fluidkanal 3.1 dient zur Verbindung mit einer Leitung für Kühlfluid zum Kühlen einer Verbrennungskraftmaschine (z. B. einem Verbrennungsmotor, Ottomotor, etc.) eines Kraftfahrzeugs Aus den Figuren 1 und 2 wird ersichtlich, dass das Tanksegment 3 als Bodenabdeckung und zugleich als Bodenheizung für das Gehäuse 1 und somit das Reduktionsmittel dient.

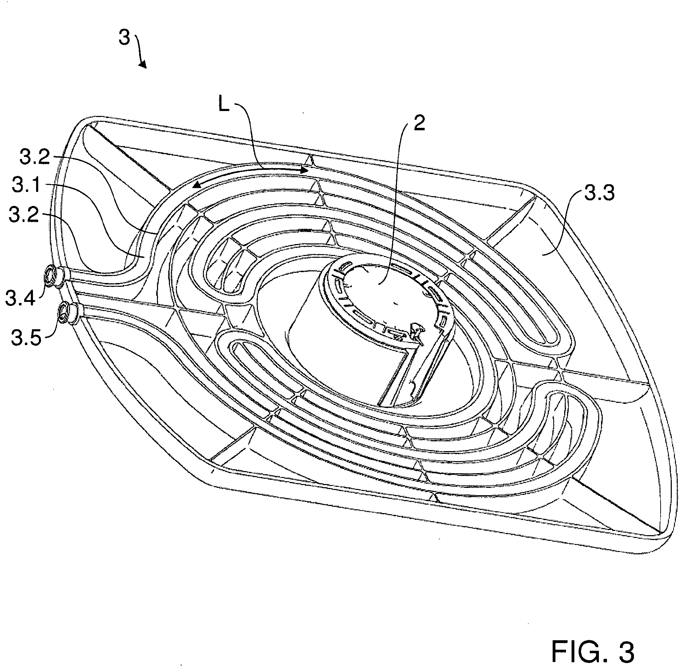

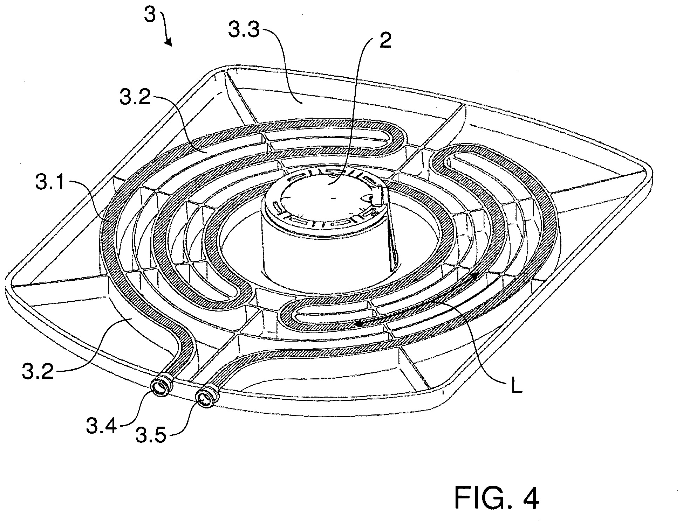

Die Figuren 3 und 4 zeigen unterschiedliche perspektivische Ansichten eines Tanksegments 3 gemäß einer Ausführungsform der Erfindung, das identisch zu dem Tanksegment 3 der Figuren 1 und 2 ausgeführt ist.

Aus den Figuren 3 und 4 wird insbesondere nochmals ersichtlich, dass das Tanksegment 3 mit einem integrierten Fluidkanal 3.1 versehen ist und das Tanksegment 3 einschließlich des Fluidkanals 3.1 durch ein und dasselbe Formteil ausgebildet wird. Der Fluidkanal 3.1 ist somit zweckmäßig einstückig-integraler Teil des Tanksegments 3.

Der Fluidkanal 3.1 ist auf der Innenseite der flächenförmigen Wandung 3.3 ausgebildet und wird im Montagezustand des Reduktionsmitteltanks 3 entlang seiner Längserstreckung L unten durch einen Teil der flächenförmigen Wandung 3.3, seitlich durch die zwei im Wesentlichen parallel verlaufenden Wandelemente 3.2 und oben durch ein Bodensegment des Gehäuses 1 begrenzt. Der Fluidkanal 3.1 verläuft bogen- und mäanderförmig um die Aufnahmeöffnung für das Fördermodul 2.

Das Tanksegment 3 umfasst ferner mehrere Versteifungsrippen, insbesondere zur Aussteifung der flächenförmigen Wandung 3.3.

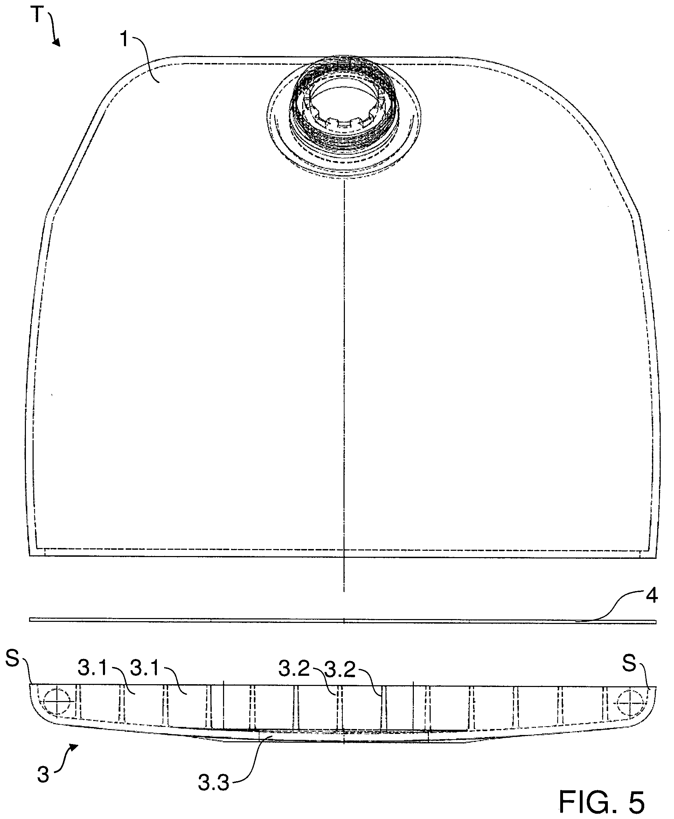

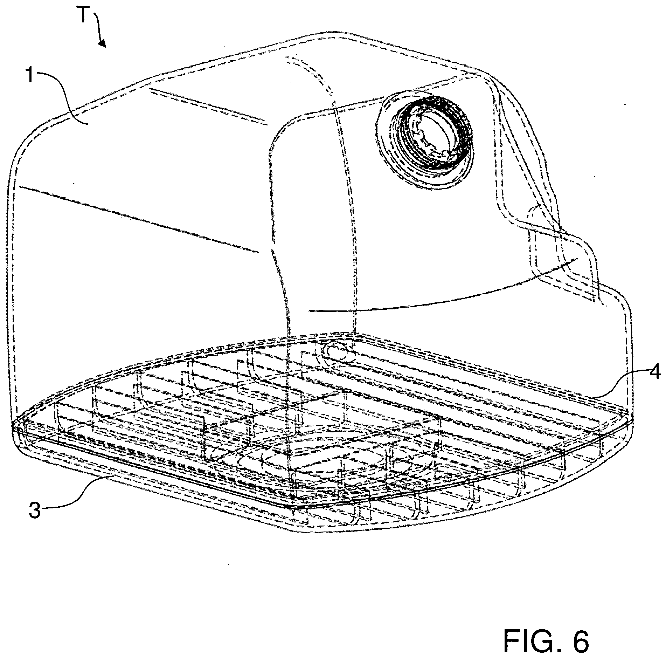

Figur 5 zeigt eine explosionsartige Ansicht eines Reduktionsmitteltanks T gemäß einer anderen Ausführungsform der Erfindung, während Figur 6 eine zugehörige perspektivische Ansicht des Reduktionsmitteltanks T zeigt.

Unter Bezugnahme auf die Figuren 5 und 6 stellt zunächst insbesondere die Ausführung des Tankelements 4 eine Besonderheit dar. Das vorzugsweise plattenförmige Tankelement 4 ist zwischen dem Gehäuse 1 und dem Tanksegment 3 angeordnet, dient zur Schließung des Fluidkanals 3.1 zur Oberseite hin und dient zur Trennung und zugleich zur Kontaktierung des Reduktionsmittels im Gehäuse 1 und des Fluids im Tanksegment 3, insbesondere im Fluidkanal 3.1.

Das Tankelement 4 ist aus Kunststoffmaterial ausgebildet, das mit zumindest einem Zusatzwerkstoff (z. B. Füllstoff, Additiv und/oder Zusatzstoff) additiviert ist, so dass zweckmäßig der Zusatzwerkstoff in das Kunststoffmaterial eingelagert ist, insbesondere selbigem beigemischt ist. Der Zusatzwerkstoff dient zur Steigerung der Wärmeleitfähigkeit des Kunststoffmaterials, so dass die Wärme des Fluids aus dem Fluidkanal 3.1 effektiver auf das Reduktionsmittel im Gehäuse 1 übertragbar ist. Die Zugabe des Zusatzwerkstoffs zum Kunststoffmaterial erfolgt zweckmäßig während des Herstellprozesses des Tankelements 4. Durch anteilige Beimischung/Additivierung des Zusatzwerkstoffs kann die Wärmeleitfähigkeit des Kunststoffmaterials des Tankelements 4 erhöht werden, so dass zweckmäßig die Heizleistung des Tanksegments 3 steigerbar ist.

Weil das Tankelement 4 mit dem Harnstoff umfassenden Reduktionsmittel im Gehäuse 1 in Kontakt kommt, muss das Kunststoffmaterial und/oder dessen Zusatzwerkstoff Harnstoff-resistent sein. Der Zusatzwerkstoff kann durch entsprechende Einarbeitung in den Kunststoff gegebenenfalls auch nicht Harnstoff-resistent sein. In diesem Fall muss der Zusatzwerkstoff durch entsprechende Herstellung z. B. vollständig durch Kunststoffmaterial umschlossen sein, um keinen Kontakt zum Harnstoff aufzuweisen.

Der Zusatzwerkstoff kann z. B. Bornitrid umfassen, das einerseits zu einer Wärmeleitfähigkeitsverbesserung des Kunststoffmaterials führt und andererseits Harnstoff-resistent ist.

Eine weitere Besonderheit der in den Figuren 5 und 6 gezeigten Ausführungsform ist der labyrinthförmige Fluidkanal 3.1.

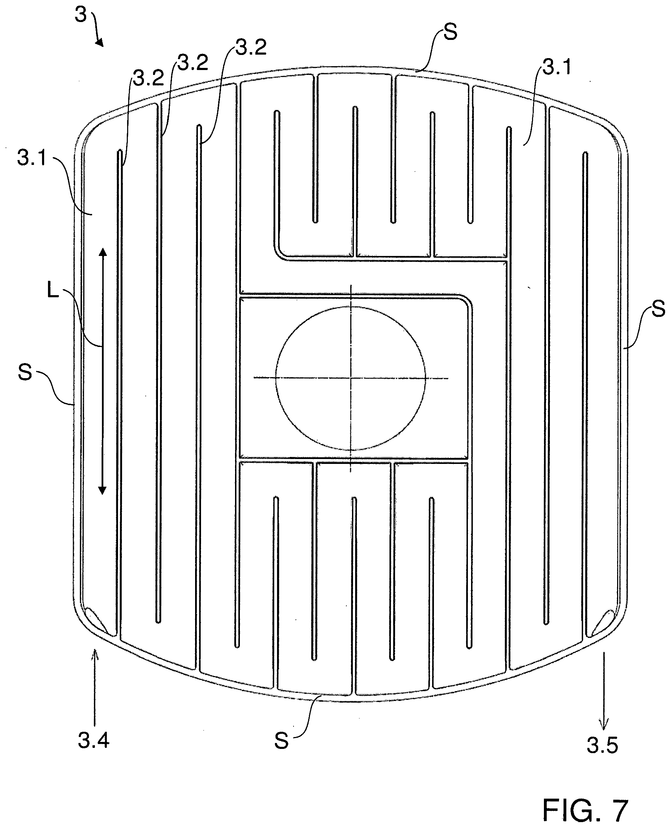

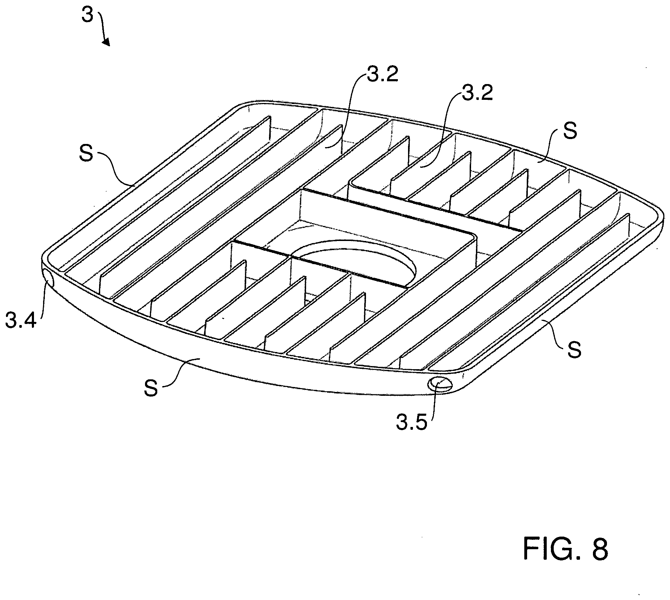

Figur 7 zeigt eine Draufsicht auf das Tanksegment 3 der Figuren 5 und 6, während Figur 8 eine zugehörige perspektivische Ansicht des Tanksegments 3 zeigt.

Den Figuren 7 und 8 kann insbesondere der labyrinthförmige Verlauf des Fluidkanals 3.1 entnommen werden.

Der Fluidkanal 3.1 wird mittels einer durch das Tanksegment 3 gebildeten Begrenzungsstruktur 3.2 entlang seiner Längserstreckung L begrenzt. Die Begrenzungsstruktur 3.2 umfasst zusätzlich zu der Wandung 3.3 die Seitenaußenwände S des Tanksegments 3.

Die Begrenzungsstruktur 3.2 umfasst nicht wie in der Ausführungsform der Figuren 1 bis 4 nur ein Wandelement-Paar, dessen Wandelemente sich kontinuierlich über das Tanksegment 3 erstrecken, sondern eine Vielzahl an Wandelement-Paaren, deren Wandelemente sich abschnittsweise überlappen, sich gegenläufig und zweckmäßig diskontinuierlich erstrecken. Die Wandelement-Paare erzeugen an deren Längsenden einen Fluidkanal-Richtungswechsel um im Wesentlichen 180°.

Dadurch kann ermöglicht werden, dass sich der Fluidkanal 3.1 über die im Wesentlichen gesamte Grundfläche des Tanksegments 3 labyrinthförmig erstreckt, mit Ausnahme der Aufnahmeöffnung für das Fördermodul 2, so dass ein möglichst großer Bereich des Tanksegments 3 durch das Fluid anströmbar und somit erwärmbar ist bzw. eine maximale Ausnutzung der zur Verfügung stehenden Heizfläche des Tanksegments 3 gepaart mit konstruktiv maximaler Länge des Fluidkanals 3.1 erfolgt.

### Bezugszeichenliste

- T: Reduktionsmitteltank, insbesondere Harnstofftank
- 1: Gehäuse
- 1.1: Gehäuseabschnitt
- 1.2: Gehäuseabschnitt
- 2: Fördermodul zum Fördern des Reduktionsmittels
- 3: Tanksegment, z. B. Heizelement
- 3.1: Fluidkanal, insbesondere Heizkanal zum Führen eines Fluides zum Erwärmen des Reduktionsmittels
- 3.2: Begrenzungsstruktur für den Fluidkanal, insbesondere seitliche Begrenzungsstruktur
- 3.3: Hauben- und/oder flächenförmige Wandung
- 3.4: Fluidkanal-Einlass
- 3.5: Fluidkanal-Auslass
- 4: Tankelement, insbesondere zur Anordnung zwischen Gehäuse und Tanksegment
- S: Seitenaußenwände des Tanksegments
- L: Längserstreckung, insbesondere Längsrichtung, des Fluidkanals

## Patentansprüche

1. Reduktionsmitteltank (T) für ein Reduktionsmittel und vorzugsweise zur Montage an ein Kraftfahrzeug, mit einem Gehäuse (1) zur Aufnahme des Reduktionsmittels, einem Tanksegment (3) und vorzugsweise einem Fördermodul (2) zum Fördern des Reduktionsmittels, wobei das Tanksegment (3) zumindest einen integrierten Fluidkanal (3.1) zum Führen eines Fluids zum Erwärmen des Reduktionsmittels aufweist, insbesondere so, dass das Tanksegment (3) selbst den Fluidkanal (3.1) ausbildet, wobei zwischen dem Gehäuse (1) und dem Tanksegment (3) ein Tankelement (4) aus Kunststoffmaterial angeordnet ist, **dadurch gekennzeichnet, dass** das Kunststoffmaterial mit zumindest einem Zusatzwerkstoff zur Erhöhung der Wärmeleitfähigkeit additiviert ist.

2. Reduktionsmitteltank (T) nach Anspruch 1, **dadurch gekennzeichnet, dass** ein und dasselbe Formteil das Tanksegment (3) und den Fluidkanal (3.1) ausbildet.

3. Reduktionsmitteltank (T) nach einem der vorhergehenden Ansprüche, **dadurch gekennzeichnet, dass** das Tanksegment (3) und/oder das Formteil ein Spritzgussteil sind.

4. Reduktionsmitteltank (T) nach einem der vorhergehenden Ansprüche, **dadurch gekennzeichnet, dass** der Fluidkanal (3.1) auf einer Innenseite des Tanksegments (3) ausgebildet ist.

5. Reduktionsmitteltank (T) nach einem der vorhergehenden Ansprüche, **dadurch gekennzeichnet, dass** das Tanksegment (3) das Fördermodul (2) aufweist und/oder eine Aufnahmeöffnung für das Fördermodul (2) aufweist.

6. Reduktionsmitteltank (T) nach einem der vorhergehenden Ansprüche, **dadurch gekennzeichnet, dass** zumindest ein Fluidkanal (3.1) zumindest abschnittsweise bogenförmig um die Aufnahmeöffnung für das Fördermodul (2) und/oder zumindest abschnittsweise geradlinig verläuft.

7. Reduktionsmitteltank (T) nach einem der vorhergehenden Ansprüche, **dadurch gekennzeichnet, dass** das Tanksegment (3) eine hauben- und/oder flächenförmige Wandung (3.3) umfasst und die Wandung (3.3) eine vorzugsweise untere Abschlussabdeckung für das Gehäuse (1) bildet.

8. Reduktionsmitteltank (T) nach einem der vorhergehenden Ansprüche, **dadurch gekennzeichnet, dass** der Fluidkanal (3.1) mittels einer durch das Tanksegment (3) gebildeten Begrenzungsstruktur (3.2) entlang seiner Längserstreckung (L) begrenzt wird.

9. Reduktionsmitteltank (T) nach einem der vorhergehenden Ansprüche, **dadurch gekennzeichnet, dass** das Tanksegment (3) und/oder die Begrenzungsstruktur (3.2) den Fluidkanal (3.1) zu einer Seite hin offen lässt und die Seite und somit der Fluidkanal (3.1) durch ein benachbartes Tankelement (4) geschlossen wird.

10. Reduktionsmitteltank (T) nach einem der vorhergehenden Ansprüche, **dadurch gekennzeichnet, dass** das Tanksegment (3) und/oder die Begrenzungsstruktur (3.2) den Fluidkanal (3.1) zur Oberseite hin offen lässt und die Oberseite durch ein aufgesetztes Tankelement (4), insbesondere ein Bodensegment des Gehäuses (1), geschlossen wird.

11. Reduktionsmitteltank (T) nach einem der vorhergehenden Ansprüche, **dadurch gekennzeichnet, dass** das Tanksegment (3) unter einem Tankelement (4), insbesondere einem Bodensegment des Gehäuses (1), angeordnet ist und/oder als Bodenheizung für das Gehäuse (1) und somit das Reduktionsmittel dient.

12. Reduktionsmitteltank (T) nach einem der vorhergehenden Ansprüche, **dadurch gekennzeichnet, dass** der Fluidkanal (3.1) mit einem Kühlkreislauf einer Verbrennungskraftmaschine des Kraftfahrzeugs verbindbar ist.

13. Reduktionsmitteltank (T) nach einem der vorhergehenden Ansprüche, **dadurch gekennzeichnet, dass** der Fluidkanal (3.1) mittels einer durch das Tanksegment (3) gebildeten Begrenzungsstruktur (3.2) begrenzt wird und die Begrenzungsstruktur (3.2) eine oder mehrere Seitenaußenwände des Tanksegments (3) umfasst.

14. Reduktionsmitteltank (T) nach einem der vorhergehenden Ansprüche, **dadurch gekennzeichnet, dass** der Fluidkanal (3.1) zumindest abschnittsweise mäanderförmig, labyrinthförmig und/oder schneckenförmig verläuft.

15. Reduktionsmitteltank (T) nach einem der vorhergehenden Ansprüche, **dadurch gekennzeichnet, dass** der Fluidkanal (3.1) mittels einer durch das Tanksegment (3) gebildeten Begrenzungsstruktur (3.2) begrenzt wird und die Begrenzungsstruktur (3.2) ein Wandelement-Paar umfasst, dessen Wandelemente sich kontinuierlich über das Tanksegment (3) erstrecken, oder eine Vielzahl an Wandelement-Paaren umfasst, deren Wandelemente sich abschnittsweise überlappen und sich vorzugsweise gegenläufig erstrecken.

16. Reduktionsmitteltank (T) nach einem der vorhergehenden Ansprüche, **dadurch gekennzeichnet, dass** das Kunststoffmaterial und/oder der Zusatzwerkstoff Harnstoff-resistent ist.

17. Reduktionsmitteltank (T) nach einem der vorhergehenden Ansprüche, **dadurch gekennzeichnet, dass** das Tankelement (4) zur Trennung und/oder Kontaktierung des Reduktionsmittels im Gehäuse (1) und des Fluids im Tanksegment (3) ausgebildet ist.

18. Reduktionsmitteltank (T) nach einem der vorhergehenden Ansprüche, **dadurch gekennzeichnet, dass** der Zusatzwerkstoff Bornitrid umfasst.

19. Reduktionsmitteltank (T) nach einem der vorhergehenden Ansprüche, **dadurch gekennzeichnet, dass** der Zusatzwerkstoff in das Kunststoffmaterial eingearbeitet ist, um vom Reduktionsmittel isoliert zu werden und insbesondere somit mit dem Reduktionsmittel nicht in Kontakt zu kommen.

20. Reduktionsmitteltank (T) nach einem der vorhergehenden Ansprüche, **dadurch gekennzeichnet, dass** der Reduktionsmitteltank (T) eine elektrische Heizeinrichtung zum Erwärmen des Reduktionsmittels im Gehäuse (1) aufweist.

21. Kraftfahrzeug, vorzugsweise Nutzfahrzeug, mit einem Reduktionsmitteltank (T) nach einem der Ansprüche 1 bis 20.

## Claims

1. Reducing agent tank (T) for a reducing agent and preferably for installation on a motor vehicle, having a housing (1) for accommodating the reducing agent, having a tank segment (3), and preferably having a delivery module (2) for delivering the reducing agent, wherein the tank segment (3) has at least one integrated fluid duct (3.1) for conducting a fluid for warming the reducing agent, in particular in such a way that the tank segment (3) itself forms the fluid duct (3.1), wherein a tank element (4) of plastics material is arranged between the housing (1) and the tank segment (3), **characterized in that** the plastics material is additized with at least one additional material for increasing the thermal conductivity.

2. Reducing agent tank (T) according to Claim 1, **characterized in that** one and the same moulded part forms the tank segment (3) and the fluid duct (3.1).

3. Reducing agent tank (T) according to one of the preceding claims, **characterized in that** the tank segment (3) and/or the moulded part are one injection-moulded part.

4. Reducing agent tank (T) according to one of the preceding claims, **characterized in that** the fluid duct (3.1) is formed on an inner side of the tank segment (3).

5. Reducing agent tank (T) according to one of the preceding claims, **characterized in that** the tank segment (3) has the delivery module (2) and/or has a receiving opening for the delivery module (2).

6. Reducing agent tank (T) according to one of the preceding claims, **characterized in that** at least one fluid duct (3.1) runs, at least in sections, in arcuate fashion around the receiving opening for the delivery module (2) and/or, at least in sections, in rectilinear fashion.

7. Reducing agent tank (T) according to one of the preceding claims, **characterized in that** the tank segment (3) comprises a lid-like and/or surface-like wall (3.3), and the wall (3.3) forms a preferably lower terminating cover for the housing (1).

8. Reducing agent tank (T) according to one of the preceding claims, **characterized in that** the fluid duct (3.1) is delimited along its longitudinal extent (L) by way of a delimiting structure (3.2) formed by the tank segment (3).

9. Reducing agent tank (T) according to one of the preceding claims, **characterized in that** the tank segment (3) and/or the delimiting structure (3.2) leaves the fluid duct (3.1) open to one side, and the side, and thus the fluid duct (3.1), are closed by an adjacent tank element (4).

10. Reducing agent tank (T) according to one of the preceding claims, **characterized in that** the tank segment (3) and/or the delimiting structure (3.2) leaves the fluid duct (3.1) open toward the top side, and the top side is closed by a tank element (4) placed thereon, in particular by a base segment of the housing (1).

11. Reducing agent tank (T) according to one of the preceding claims, **characterized in that** the tank segment (3) is arranged under a tank element (4), in particular a base segment of the housing (1), and/or serves as a base heater for the housing (1), and thus for the reducing agent.

12. Reducing agent tank (T) according to one of the preceding claims, **characterized in that** the fluid duct (3.1) is connectable to a cooling circuit of an internal combustion engine of the motor vehicle.

13. Reducing agent tank (T) according to one of the preceding claims, **characterized in that** the fluid duct (3.1) is delimited by means of a delimiting structure (3.2) formed by the tank segment (3) and the delimiting structure (3.2) comprises one or more lateral outer walls of the tank segment (3).

14. Reducing agent tank (T) according to one of the preceding claims, **characterized in that** the fluid duct (3.1) runs, at least in sections, with a meandering shape, labyrinth shape and/or helical shape.

15. Reducing agent tank (T) according to one of the preceding claims, **characterized in that** the fluid duct (3.1) is delimited by means of a delimiting structure (3.2) formed by the tank segment (3) and the delimiting structure (3.2) comprises a wall element pair whose wall elements extend continuously over the tank segment (3), or comprises a plurality of wall element pairs whose wall elements overlap the sections and preferably extend oppositely.

16. Reducing agent tank (T) according to one of the preceding claims, **characterized in that** the plastics material and/or the additional material is urearesistant.

17. Reducing agent tank (T) according to one of the preceding claims, **characterized in that** the tank element (4) is designed for separating and/or contacting the reducing agent in the housing (1) and the fluid in the tank segment (3).

18. Reducing agent tank (T) according to one of the preceding claims, **characterized in that** the additional material is boron nitride.

19. Reducing agent tank (T) according to one of the preceding claims, **characterized in that** the additional material is incorporated into the plastics material in order to be isolated from the reducing agent and in particular thus not to come into contact with the reducing agent.

20. Reducing agent tank (T) according to one of the preceding claims, **characterized in that** the reducing agent tank (T) has an electrical heating device for warming the reducing agent in the housing (1).

21. Motor vehicle, preferably utility vehicle, having a reducing agent tank (T) according to one of Claims 1 to 20.

## Revendications

1. Réservoir d'agent réducteur (T) pour un agent réducteur et de préférence à monter sur un véhicule, avec une enceinte (1) destinée à contenir l'agent réducteur, un segment de réservoir (3) et de préférence un module de transport (2) pour le transport de l'agent réducteur, dans lequel le segment de réservoir (3) présente au moins un canal de fluide intégré (3.1) pour la conduite d'un fluide destiné à chauffer l'agent réducteur, en particulier de telle manière que le segment de réservoir (3) forme lui-même le canal de fluide (3.1), dans lequel un élément de réservoir (4) en matière plastique est disposé entre l'enceinte (1) et le segment de réservoir (3), **caractérisé en ce qu'**à la matière plastique est ajouté au moins un matériau supplémentaire pour accroître la conductibilité thermique.

2. Réservoir d'agent réducteur (T) selon la revendication 1, **caractérisé en ce qu'**une seule et même pièce moulée forme le segment de réservoir (3) et le canal de fluide (3.1).

3. Réservoir d'agent réducteur (T) selon une des revendications précédentes, **caractérisé en ce que** le segment de réservoir (3) et/ou la pièce moulée sont une pièce moulée par injection.

4. Réservoir d'agent réducteur (T) selon une des revendications précédentes, **caractérisé en ce que** le canal de fluide (3.1) est formé sur un côté intérieur du segment de réservoir (3).

5. Réservoir d'agent réducteur (T) selon une des revendications précédentes, **caractérisé en ce que** le segment de réservoir (3) présente le module de transport (2) et/ou présente une ouverture de réception pour le module de transport (2).

6. Réservoir d'agent réducteur (T) selon une des revendications précédentes, **caractérisé en ce qu'**au moins un canal de fluide (3.1) s'étend au moins en partie en forme d'arc autour de l'ouverture de réception pour le module de transport (2) et/ou au moins en partie en ligne droite.

7. Réservoir d'agent réducteur (T) selon une des revendications précédentes, **caractérisé en ce que** le segment de réservoir (3) comprend une paroi en forme de hotte et/ou de plaque (3.3) et la paroi (3.3) forme un recouvrement d'extrémité de préférence inférieur pour l'enceinte (1).

8. Réservoir d'agent réducteur (T) selon une des revendications précédentes, **caractérisé en ce que** le canal de fluide (3.1) est limité le long de son extension longitudinale (L) au moyen d'une structure de limitation (3.2) formée par le segment de réservoir (3).

9. Réservoir d'agent réducteur (T) selon une des revendications précédentes, **caractérisé en ce que** le segment de réservoir (3) et/ou la structure de limitation (3.2) laisse(nt) le canal de fluide (3.1) ouvert vers un côté et le côté et dès lors le canal de fluide (3.1) est fermé par un élément de réservoir voisin (4).

10. Réservoir d'agent réducteur (T) selon une des revendications précédentes, **caractérisé en ce que** le segment de réservoir (3) et/ou la structure de limitation (3.2) laisse(nt) le canal de fluide (3.1) ouvert vers le côté supérieur et le côté supérieur est fermé par un élément de réservoir (4) superposé, en particulier par un segment de fond de l'enceinte (1).

11. Réservoir d'agent réducteur (T) selon une des revendications précédentes, **caractérisé en ce que** le segment de réservoir (3) est disposé en dessous d'un élément de réservoir (4), en particulier d'un segment de fond de l'enceinte (1) et/ou fait office de chauffage de fond pour l'enceinte (1) et dès lors pour l'agent réducteur.

12. Réservoir d'agent réducteur (T) selon une des revendications précédentes, **caractérisé en ce que** le canal de fluide (3.1) peut être raccordé à un circuit de refroidissement d'un moteur à combustion interne du véhicule à moteur.

13. Réservoir d'agent réducteur (T) selon une des revendications précédentes, **caractérisé en ce que** le canal de fluide (3.1) est limité au moyen d'une structure de limitation (3.2) formée par le segment de réservoir (3) et la structure de limitation (3.2) comprend une ou plusieurs parois extérieures latérales du segment de réservoir (3).

14. Réservoir d'agent réducteur (T) selon une des revendications précédentes, **caractérisé en ce que** le canal de fluide (3.1) s'étend au moins en partie en forme de méandres, en forme de labyrinthe et/ou en forme d'hélice.

15. Réservoir d'agent réducteur (T) selon une des revendications précédentes, **caractérisé en ce que** le canal de fluide (3.1) est limité au moyen d'une structure de limitation (3.2) formée par le segment de réservoir (3) et la structure de limitation (3.2) comprend une paire d'éléments de paroi, dont les éléments de paroi s'étendent sous forme continue sur le segment de réservoir (3), ou comprend une pluralité de paires d'éléments de paroi, dont les éléments de paroi se chevauchent en partie et s'étendent de préférence en sens inverse.

16. Réservoir d'agent réducteur (T) selon une des revendications précédentes, **caractérisé en ce que** la matière plastique et/ou le matériau supplémentaire est résistant à l'urée.

17. Réservoir d'agent réducteur (T) selon une des revendications précédentes, **caractérisé en ce que** l'élément de réservoir (4) est réalisé pour séparer et/ou mettre en contact l'agent réducteur dans l'enceinte (1) et le fluide dans le segment de réservoir (3).

18. Réservoir d'agent réducteur (T) selon une des revendications précédentes, **caractérisé en ce que** le matériau supplémentaire comprend du nitrure de bore.

19. Réservoir d'agent réducteur (T) selon une des revendications précédentes, **caractérisé en ce que** le matériau supplémentaire est incorporé dans la matière plastique, afin d'être isolé de l'agent réducteur, et notamment de ne pas venir ainsi en contact avec l'agent réducteur.

20. Réservoir d'agent réducteur (T) selon une des revendications précédentes, **caractérisé en ce que** le réservoir d'agent réducteur (T) présente un dispositif de chauffage électrique pour chauffer l'agent réducteur dans l'enceinte (1).

21. Véhicule à moteur, en particulier véhicule utilitaire, muni d'un réservoir d'agent réducteur (T) selon une des revendications 1 à 20.
